# EUROPEAN PATENT SPECIFICATION

(11) **EP 3 513 994 B1**
(45) Date of publication and mention of the grant of the patent: **28.10.2020**
(21) Application number: 19153062.5
(22) Date of filing: 22.01.2019
(51) Int. Cl.: B60J 7/04

(54) **ROLLER LID FOR TRUCK BED**
ROLLENDECKEL FÜR LADEFLÄCHE
COUVERCLE DE ROULEAU POUR LIT DE CAMION

(30) Priority: 23.01.2018 TH 1803000176 U
(43) Date of publication of application: 24.07.2019
(73) Proprietor: Aeroklas Company Limited, 21180 Rayong (TH)
(72) Inventor: VITOORAPAKORN, EKAWAT, 21180 RAYONG (TH); VITOORAPAKORN, SUPAWADEE, 10540 SAMUTPRAKARN (TH)
(74) Representative: Curell Suñol S.L.P.

(56) References cited:
- AU-A- 5 956 599
- US-A- 3 148 724
- US-A1- 2016 031 305
- US-A1- 2016 059 682

## Description

### Field of the invention

This invention relates to a roller lid for truck bed according to the preamble of claim 1.

### State of the art

The present invention relates to a roller lid for truck bed, particularly to a slat, a flexible joiner member, and an end cap of the roller lid for truck bed.

An example of prior art roller lid for truck bed is the U.S. patent No. 9,399,391 invented by Bernado et al. The roller lid for truck bed according to the patent No. 9,399,391 consists of a plurality of slats, at least one flexible joiner member, and a plurality of end caps. Each of the slats consists of a leading edge and a trailing edge. The leading edge consists of a first step nib as a first structural barrier. The trailing edge consists of a second step nib as a second structural barrier. When the leading edge of the first slat is coupled to the trailing edge of the second slat, the first structural barrier is stacked on the second structural barrier to protect the flexible joiner member from cutting using a cutter for the purpose of theft prevention. The slats are made of extruded aluminium. The apparatus according to the patent No. 9,399,391 has a disadvantage, namely may generate noise while in use from the collision of the slats made of aluminium i.e. the collision of the leading edge of the first slat and the trailing edge of the second slat.

US2016031305A1 discloses a retractable truck bed cover having an array of parallel aluminum slats joined together by connective hinges including leading and trailing edge configuration for improving the security of the cover by covering and concealing the seam between adjacent slats while improving the connective hinge's resistance to the effects of aging and/or exposure to temperature fluctuations. The truck bed cover connective hinge slat is designed to be in an array of discrete slats, which are joined to one another by means of joiner members secured at each end to slat end caps. The distal ends of the joiner members are attached to slat end caps at the distal ends of the slats, thereby preventing the joiner members from shrinking in relationship to the slats due to aging and/or exposure to temperature fluctuations.
US2016059682A1 discloses a tonneau system for a pickup bed comprising a bracket system connectable with a sidewall of the pickup bed and a plurality of hingeable sections pivotally coupled to each other to define a continuous surface. Each of the plurality of hingeable sections being connected to adjacent hingeable sections to permit at least some of the plurality of hingeable sections to be rolled together into a generally circular cross-section to selectively reveal the pickup bed.

AU5956599A discloses a door construction applied to truck doors. In particular it is disclosed an assembly of two components each component having a longitudinal connected edge and the components being interconnected and relatively spaced along their connected edges by a connection member, the components and the connection member having complementary male and female formations which interfit to prevent separation of the components but which permit hinging of one of the components relative to the other. The complementary formations are dependent from a stem whereby the connection member forms a substantial T-shape, and the stem has one or more enlargements intermediate its ends and the components having one or more recesses to receive said one or more enlargements.

Finally, US3148724A discloses a roll-up door for closing an opening in a wall of a vehicle or the like comprising a plurality of hollow elongated panels having longitudinally extending recesses in the edge portions thereof, respectively, an elongated resilient hinge bar having longitudinally extending bead portions complementary to the recesses in the panels so as to be accepted therein. The hinge bar has a longitudinally extending sealing lip between the bead portions thereof sealably engageable between opposed edge portions of the door panels, a pair of vertically extending trackways on opposite sides of the opening having laterally spaced parallel walls, respectively, relative to the longitudinal axis of the panels, and pair of molded plastic end plugs at opposite ends of the panels, respectively, having integral arcuate oppositely enlarged portions extending laterally of the panels so as to be slidably received in the trackways. The enlarged portions of the end plugs are engaged with the parallel walls on the trackways to facilitate vertical movement of the door relative to the trackway yet preclude rattling therebetween, respectively.

### Summary of the invention

The present invention provides a roller lid for truck bed consisting of a plurality of slats each of which is mounted to the next one using a flexible joiner member, according to the characterising portion of claim 1.

The cross section of the slat consists of a front groove, a back groove, an upper surface, a front protrusion, a back protrusion, a front hole, and a back hole, wherein the front hole and the back hole are positioned between the front groove and the back groove, the front protrusion protrudes from the leading edge of the slat in outward direction from the slat, the back protrusion protrudes from the trailing edge of the slat in outward direction from the slat, the front protrusion is positioned lower than the upper surface by a distance, the back protrusion is positioned adjacent to the upper surface, the front groove is provided with a front opening having a width, the front opening faces outward from the slat, the back groove is provided with a back opening having a width, and the back opening faces outward from the slat.

The cross section of the flexible joiner member consists of a front end, a back end, a connecting portion positioned between the front end and the back end, a vertical protrusion protruding from the connecting portion in upward direction, a horizontal protrusion protruding from the end of the vertical protrusion in backward direction, and an upward protrusion protruding from the end of the horizontal protrusion in upward direction. The front end has a height that is longer than the width of the back opening of the back groove. The back end has a height that is longer than the width of the front opening of the front groove.

The first slat is attached to the flexible joiner member such that the front end of the flexible joiner member is positioned in the back groove of the first slat and the connecting portion is inserted through the back opening of the back groove of the first slat.

The next slat is attached to the flexible joiner member such that the back end of the flexible joiner member is positioned in the front groove of said next slat and the connecting portion is inserted through the front opening of the front groove of said next slat.

When the roller lid for truck bed is in close position, the horizontal protrusion of the flexible joiner member is positioned between the back protrusion of the first slat and the front protrusion of said next slat and the upward protrusion of the flexible joiner member is positioned between the back protrusion of the first slat and said next slat.

The objective of the present invention is to provide the horizontal protrusion and the upward protrusion of the flexible joiner member between two nearby aluminium slats to prevent noise in use as there is no collision between two nearby aluminium slats.

Another objective of the invention is to provide the front protrusions and the back protrusions of two nearby slats for covering the connecting portion of the flexible joiner member to prevent the connecting portion from cutting using a cutter so that properties kept under the roller lid for truck bed can be prevented from theft.

Other objectives will be apparent from the description and drawing described below.

### Brief description of the drawings

Fig. 1 is a back perspective view showing a pick-up truck mounted with the roller lid for truck bed according to the present invention wherein the roller lid for truck bed is in close position.
Fig. 2 is a back perspective view showing the slats according to the present invention mounted with the flexible joiner members and covers.
Fig. 3 is a cross section view of the left side rail into which the cover and the slat according to the present invention are inserted.
Fig. 4 is a cross section view taken from the line 4-4 in Fig. 1 showing the cross section of the slat according to the present invention.
Fig. 5 is a cross section view taken from the line 4-4 in Fig. 1 showing the cross section of the flexible joiner member according to the present invention.
Fig. 6 is the same view as Fig. 5 showing components of the flexible joiner member according to the present invention.
Fig. 7 is a cross section view taken from the line 4-4 in Fig. 1 showing the flexible joiner member according to the present invention mounted between the first slat and the next slat wherein the roller lid for truck bed is in close position.
Fig. 8 is a cross section view showing the flexible joiner member according to the present invention mounted between the first slat and the next slat wherein the roller lid for truck bed is in reeled in position.
Fig. 9 is a back perspective view showing the cover according to the present invention.
Fig. 10 is a back perspective view showing the method for mounting the covers onto the slats according to the present invention.
Fig. 11 is a side view showing the covers mounted on the slats according to the present invention and the roller lid for truck bed is in close position.

### Detailed description of embodiments of the invention

The details of the present invention will be described as follows by reference to the drawings including numbers of parts wherein the same numbers appearing in figures denote the same parts.

In the following description, the terms "front" and "back" will be used. The "front" means being oriented toward the front side or being closer to the front side of the pick-up truck. The "back" means being oriented toward the rear side or being closer to the rear side of the pick-up truck.

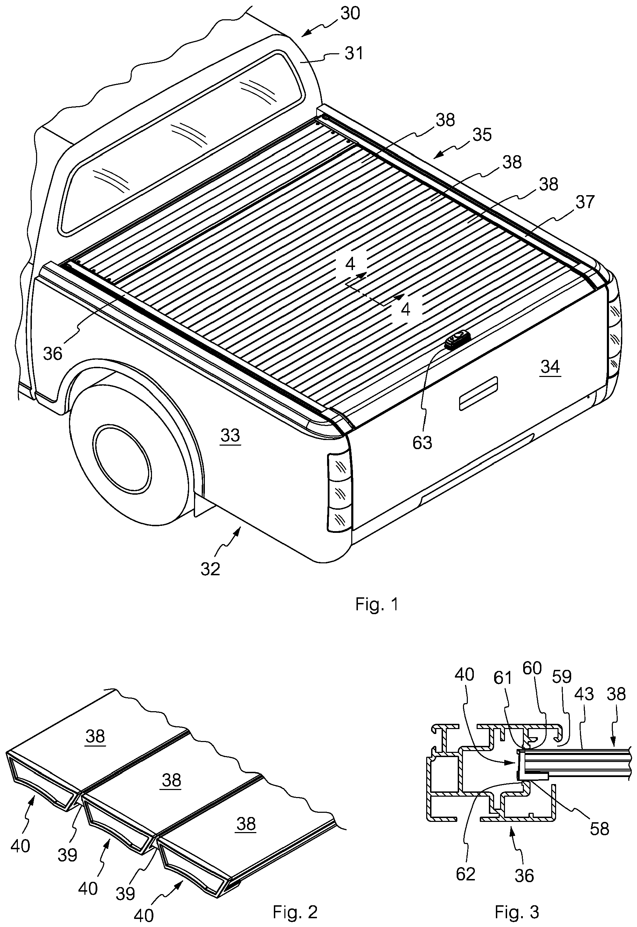

Fig. 1 shows the pick-up truck 30 mounted with the roller lid for truck bed 35 according to the present invention wherein the roller lid for truck bed 35 is in close position. The pick-up truck 30 consists of a passenger cabin 31 and a truck bed 32 wherein the truck bed 32 consists of a left truck bed wall 33 and a tailgate 34. The tailgate 34 is shown in close position. The figure also shows a left side rail 36 and a right side rail 37 attached to the truck bed 32 and shows a plurality of slats 38 arranged successively wherein each of the slats 38 is positioned in transverse direction. Each of the slats 38 has a length extending from the left side rail 36 to the right side rail 37. While in use, the user can grab the handle 63 and turn the handle 63 to unlock to allow the slats 38 to be moved to the front side of the truck bed so that the slats 38 are reeled into their storage adjacent to the front side of the truck bed so that the roller lid for truck bed 35 is in close position.

Fig. 2 shows a plurality of the slats 38 according to the present invention mounted to the flexible joiner members 39 and the covers 40. The figure shows the left side ends of the slats 38 and the left covers 40 wherein the right side ends of the slats 38 are also provided with right covers wherein the right covers are symmetrical to the covers 40.

Fig. 3 shows the left side end of the slat 38 mounted to the cover 40 and inserted into the left side rail 36. It is shown in the drawing that the left side rail 36 is provided with an outer opening 59 and an inner opening 60 wherein the left side end of the slat 38 and the cover 40 are inserted through the outer opening 59 and the inner opening 60 and the cover 40 is positioned between an upper edge 61 and a lower edge 62 of the inner opening 60. While in use when the slats 38 are moved toward or away from the tailgate 34, such arrangement will allow the lower surface 58 of the covers 40 to be slid over the lower edge 62. The cover 40 is made of plastic and the like.

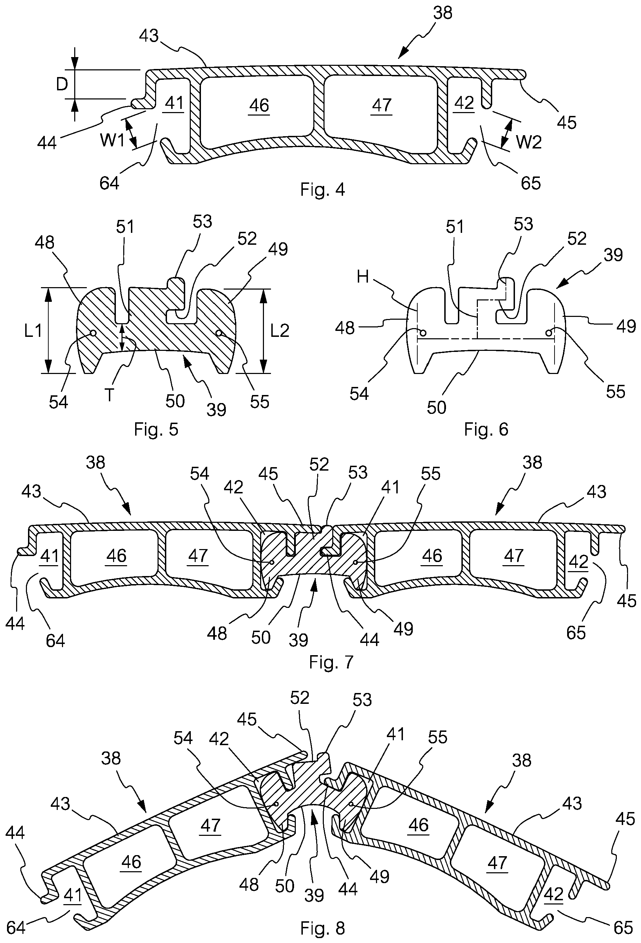

Fig. 4 shows the cross section of the slat 38 according to the present invention consisting of the front groove 41, the back groove 42, the upper surface 43, the front protrusion 44, the back protrusion 45, the front hole 46, and the back hole 47, wherein the front hole 46 and the back hole 47 are positioned between the front groove 41 and the back groove 42, the front protrusion 44 protrudes from the leading edge of the slat 38 in outward direction from the slat 38, the back protrusion 45 protrudes from the trailing edge of the slat 38 in outward direction from the slat 38, the front protrusion 44 is positioned lower than the upper surface 43 by a distance shown in the drawing as D, the back protrusion 45 is positioned adjacent to the upper surface 43, the front groove 41 is provided with the front opening 64 having a width W1, the front opening 64 faces outward from the slat 38, the back groove 42 is provided with the back opening 65 having a width W2, and the back opening 65 faces outward from the slat 38. The slat 38 is made from aluminium extrusion and the like.

Fig. 5 shows the cross section of the flexible joiner members 39 according to the present invention consisting of the front end 48, the back end 49, the connecting portion 50 positioned between the front end 48 and the back end 49, the vertical protrusion 51 protruding from the connecting portion 50 in upward direction, the horizontal protrusion 52 protruding from the end of the vertical protrusion 51 in backward direction, the upward protrusion 53 protruding from the end of the horizontal protrusion 52 in upward direction, a front string 54, and a back string 55. The flexible joiner member 39 is made of rubber and the like. The front string 54 is positioned inside the front end 48 and extended along the length of the front end. The back string 55 is positioned inside the back end 49 and extended along the length of the back end. The front string 54 and the back string 55 have the same length as that of the flexible joiner members 39. The front string 54 and the back string 55 are to prevent the flexible joiner members 39 from contraction or elongation in longitudinal direction. Said contraction or elongation of the flexible joiner members 39 is caused by changes in temperature. Each of the flexible joiner members 39 has the same length as that of the slats 38. The drawing shows that the front end 48 has a height L1 longer than the width of the back opening 65 of the back groove 42 and that the back end 49 has a height L2 longer than the width of the front opening 64 of the front groove 41 and that the connecting portion 50 has a thickness T.

In Fig. 4 and Fig. 5, the distance T is less than or equal to the distance W1 and W2. The distance L1 is more than the distance W2 and the distance L2 is more than the distance W1. The method for mounting the flexible joiner members 39 to the first slat 38 consists of inserting the front end 48 into the back groove 42 of the first slat 38 and inserting the connecting portion 50 through the back opening 65 of the first slat 38 and pulling the flexible joiner members 39 toward the first slat 38 until the whole front end 48 along the length of the flexible joiner members is positioned in the back groove 42 of the first slat 38 causing the front end 48 to be attached in the back groove 42 and not to be removed from the back groove 42 of the first slat 38 even when the user strongly pulls the slats 38 to close the roller lid for truck bed. The method for mounting the flexible joiner members 39 to the next slat 38 consists of inserting the back end 49 into the front groove 41 of the next slat 38 and insert the connecting portion 50 through the front opening 64 of the next slat 38 and pulling the flexible joiner members 39 toward the next slat 38 until the whole back end 49 along the length of the flexible joiner members is positioned in the front groove 41 of the next slat 38 causing the back end 49 to be attached in the front groove 41 and not to be removed from the front groove 41 of the next slat 38 even when the user strongly pulls the slats 38 to close the roller lid for truck bed.

Fig. 6 shows the components of the flexible joiner members 39 according to the present invention. The drawing shows that the positions of the front end 48, the back end 49, and the connecting portion 50 form letter H as shown by chain double-dashed line in the drawing wherein the vertical lines define the front end 48 and the back end 49 and the middle line define the connecting portion 50. In addition, the vertical protrusion 51 protrudes from the middle line or the connecting portion 50 and the horizontal protrusion 52 protrudes from the upper end of the vertical protrusion 51 toward the back and the upward protrusion 53 protrudes from the end of the horizontal protrusion 52 in upward direction. The drawing shows the vertical protrusion 51, the horizontal protrusion 52, and the upward protrusion 53 in chain line.

Fig. 7 shows the flexible joiner members 39 according to the present invention mounted between the first slat 38 and the next slat 38 wherein the roller lid for truck bed 35 is in close position in horizontal arrangement. The drawing shows that when the roller lid for truck bed is in close position, the upper surface of the upward protrusion 53 flush with the upper surface 43 of the first slat 38 and with the upper surface 43 of the next slat 38.

Fig. 8 shows the flexible joiner members 39 according to the present invention mounted between the first slat 38 and the next slat 38 wherein the roller lid for truck bed 35 is in reeled in position. In this position, the first slat 38 and the next slat 38 are not in the same line and they are configured such that the back protrusion 45 of the first slat 38 is further away from the front protrusion 44 of the next slat 38 and that the connecting portion 50 is curved.

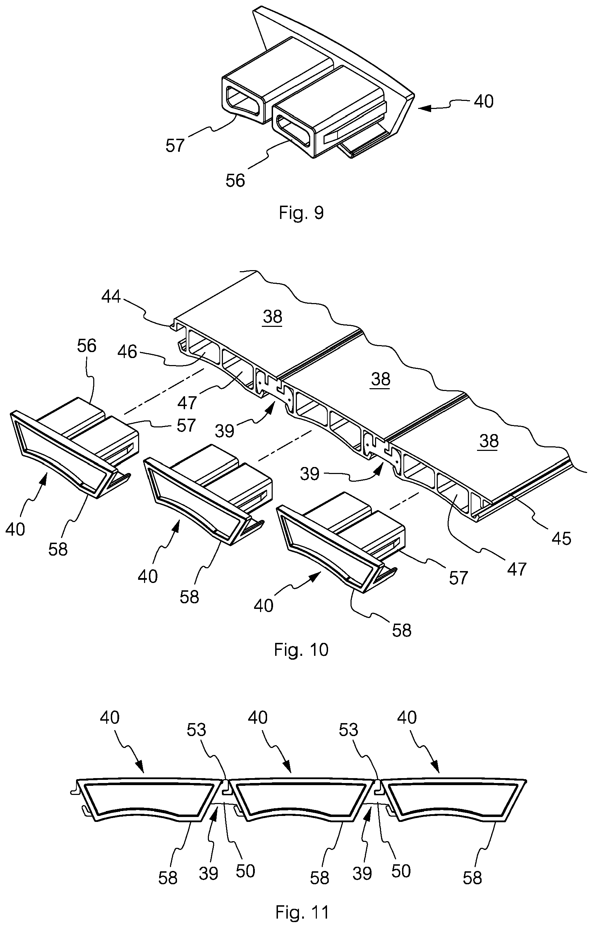

Fig. 9 is a back perspective view showing the cover 40 according to the present invention and showing a front leg 56 and a back leg 57 of the cover 40 wherein the front leg 56 can be fit in the front hole 46 of the slat 38 and the back leg 57 can be fit in the back hole 47 of the slat 38.

Fig. 10 shows the method for mounting the covers 40 according to the present invention to the slats 38 by inserting the front leg 56 into the front hole 46 and inserting the back leg 57 into the back hole 47. The finished mounting is as shown in Fig. 2 and Fig. 11.

Fig. 11 is a side view showing the covers 40 according to the present invention mounted to the slats 38 and the roller lid for truck bed 35 is in close position.

Since the roller lid for truck bed according to the present invention provides the horizontal protrusion and the upward protrusion of the flexible joiner members positioned between two nearby aluminium slats, noise is not generated in use as there is no collision between two nearby aluminium slats.

Since the roller lid for truck bed according to the present invention provides the front protrusions and the back protrusions of two nearby slats for covering the connecting portion of the flexible joiner members, the connecting portions are prevented from cutting using a cutter. Therefore, properties kept under the roller lid for truck bed can be prevented from theft.

## Claims

1. A roller lid for truck bed consisting of a plurality of slats, each slat is mounted to the next slat using a flexible joiner member (39), wherein the cross section of the slat (38) consists of a front groove (41), a back groove (42), an upper surface (43), a front protrusion (44), a back protrusion (45), a front hole (46), and a back hole (47), wherein the front hole (46) and the back hole (47) are positioned between the front groove (41) and the back groove (42), the front protrusion (44) protrudes from the leading edge of the slat in outward direction from the slat (38), the back protrusion (45) protrudes from the trailing edge of the slat in outward direction from the slat (38), the front protrusion (44) is positioned lower than the upper surface (43) by a distance, the back protrusion (45) is positioned adjacent to the upper surface (43), the front groove (41) is provided with a front opening (64) having a width, the front opening (64) faces outward from the slat, the back groove (42) is provided with a back opening (65) having a width, the back opening (65) faces outward from the slat,
**characterized in that** the cross section of the flexible joiner member (39) consists of a front end (48), a back end (49), a connecting portion (50) positioned between the front end (48) and the back end (49), a vertical protrusion (51) protruding from the connecting portion (50) in upward direction, a horizontal protrusion (52) protruding from the end of the vertical protrusion (51) in backward direction, and an upward protrusion (53) protruding from the end of the horizontal protrusion (52) in upward direction, the front end (48) has a height that is longer than the width of the back opening (65) of the back groove (42), the back end has a height that is longer than the width of the front opening (64) of the front groove (41),
the first slat (38) is attached to the flexible joiner member (39) such that the front end (48) of the flexible joiner member (39) is positioned in the back groove (42) of the first slat and the connecting portion (50) is inserted through the back opening (65) of the back groove (42) of the first slat,
the next slat (38) is attached to the flexible joiner member (39) such that the back end (49) of the flexible joiner member (39) is positioned in the front groove (41) of said next slat (38) and the connecting portion (50) is inserted through the front opening (64) of the front groove (41) of said next slat (38),
when the roller lid for truck bed is in close position, the horizontal protrusion (52) of the flexible joiner members is positioned between the back protrusion (45) of the first slat (38) and the front protrusion (44) of said next slat (38) and the upward protrusion (53) of the flexible joiner members is positioned between the back protrusion (45) of the first slat (38) and said next slat (38).

2. The roller lid for truck bed according to claim 1, **characterized in that it** further consists of front strings (54) positioned inside the front end (48) of the flexible joiner members (39) and extended along the length of the front end (48) and consisting of back strings (55) positioned inside the back end (49) of the flexible joiner members (39) and extended along the length of the back end (49).

3. The roller lid for truck bed according to claim 1, **characterized in that it** further consists of left covers (40) attached to left side ends of the slats (38), the covers (40) function to slide on a lower edge (62) of an inner opening (60) of a left side rail (36).

4. The roller lid for truck bed according to claim 1, **characterized in that** when the roller lid for truck bed is in close position, the upper surface of the upward protrusion (53) of the flexible joiner members (39) flush with the upper surface (43) of the first slat (38) and flush with the upper surface (43) of the next slat (38).

## Patentansprüche

1. Rollendeckel für eine LKW-Ladefläche, bestehend aus einer Vielzahl von Latten, wobei jede Latte mit Hilfe eines flexiblen Verbindungselements (39) an der nächsten Latte befestigt ist, wobei der Querschnitt der Latte (38) aus einer vorderen Nut (41), einer hinteren Nut (42), einer oberen Fläche (43), einem vorderen Vorsprung (44), einem hinteren Vorsprung (45), einem vorderen Loch (46) und einem hinteren Loch (47) besteht, wobei das vordere Loch (46) und das hintere Loch (47) zwischen der vorderen Nut (41) und der hinteren Nut (42) angeordnet sind und der vordere Vorsprung (44) von der Vorderkante der Latte in Auswärtsrichtung von der Latte (38) vorsteht, der hintere Vorsprung (45) von der Hinterkante der Latte in Auswärtsrichtung von der Latte (38) vorsteht, der vordere Vorsprung (44) um einen Abstand niedriger als die obere Fläche (43) positioniert ist, der hintere Vorsprung (45) an die obere Fläche (43) angrenzend positioniert ist, die vordere Nut (41) mit einer vorderen Öffnung (64) versehen ist, die eine Breite aufweist, wobei die vordere Öffnung (64) von der Latte nach außen weist, die hintere Nut (42) mit einer hinteren Öffnung (65) versehen ist, die eine Breite aufweist, wobei die hintere Öffnung (65) von der Latte nach außen weist, **dadurch gekennzeichnet, dass**
der Querschnitt des flexiblen Verbindungselements (39) aus einem vorderen Ende (48), einem hinteren Ende (49), einem Verbindungsabschnitt (50), der zwischen dem vorderen Ende (48) und dem hinteren Ende (49) angeordnet ist, einem vertikalen Vorsprung (51), der von dem Verbindungsabschnitt (50) in Aufwärtsrichtung vorsteht, einem horizontalen Vorsprung (52), der von dem Ende des vertikalen Vorsprungs (51) in Rückwärtsrichtung vorsteht, und einem nach oben gerichteten Vorsprung (53), der von dem Ende des horizontalen Vorsprungs (52) in Aufwärtsrichtung vorsteht, besteht, wobei das vordere Ende (48) eine Höhe aufweist, die länger als die Breite der hinteren Öffnung (65) der hinteren Nut (42) ist, wobei das hintere Ende eine Höhe aufweist, die länger als die Breite der vorderen Öffnung (64) der vorderen Nut (41) ist,
die erste Latte (38) so an dem flexiblen Verbindungselement (39) befestigt ist, dass das vordere Ende (48) des flexiblen Verbindungselements (39) in der hinteren Nut (42) der ersten Latte positioniert ist und der Verbindungsabschnitt (50) durch die hintere Öffnung (65) der hinteren Nut (42) der ersten Latte eingeführt ist,
die nächste Latte (38) so an dem flexiblen Verbindungselement (39) befestigt ist, dass das hintere Ende (49) des flexiblen Verbindungselements (39) in der vorderen Nut (41) der nächsten Latte (38) positioniert ist und der Verbindungsabschnitt (50) durch die vordere Öffnung (64) der vorderen Nut (41) der nächsten Latte (38) eingeführt ist, wenn sich der Rollendeckel für eine LKW-Ladefläche in einer geschlossenen Position befindet, der horizontale Vorsprung (52) der flexiblen Verbindungselemente zwischen dem hinteren Vorsprung (45) der ersten Latte (38) und dem vorderen Vorsprung (44) der nächsten Latte (38) positioniert ist und der nach oben gerichtete Vorsprung (53) der flexiblen Verbindungselemente zwischen dem hinteren Vorsprung (45) der ersten Latte (38) und der nächsten Latte (38) positioniert ist.

2. Rollendeckel für eine LKW-Ladefläche nach Anspruch 1, **dadurch gekennzeichnet, dass** er ferner aus vorderen Schnüren (54) besteht, die innerhalb des vorderen Endes (48) der flexiblen Verbindungselemente (39) angeordnet sind und sich über die Länge des vorderen Endes (48) erstrecken, und aus hinteren Schnüren (55) besteht, die innerhalb des hinteren Endes (49) der flexiblen Verbindungselemente (39) angeordnet sind und sich über die Länge des hinteren Endes (49) erstrecken.

3. Rollendeckel für eine LKW-Ladefläche nach Anspruch 1, **dadurch gekennzeichnet, dass** er ferner aus linken Abdeckungen (40) besteht, die an linken Seitenenden der Latten (38) befestigt sind, wobei die Abdeckungen (40) so funktionieren, dass sie auf einem unteren Rand (62) einer inneren Öffnung (60) einer linken Seitenschiene (36) gleiten.

4. Rollendeckel für eine LKW-Ladefläche nach Anspruch 1, **dadurch gekennzeichnet, dass,** wenn sich der Rollendeckel für eine LKW-Ladefläche in einer geschlossenen Position befindet, die obere Fläche des nach oben gerichteten Vorsprungs (53) der flexiblen Verbindungselemente (39) bündig mit der oberen Fläche (43) der ersten Latte (38) und bündig mit der oberen Fläche (43) der nächsten Latte (38) ist.

## Revendications

1. Couvercle roulant pour plateforme de camion consistant en une pluralité de lames, chaque lame est montée sur la lame suivante à l'aide d'un élément de jonction flexible (39), dans lequel la section transversale de la lame (38) consiste en une rainure avant (41), une rainure arrière (42), une surface supérieure (43), une saillie avant (44), une saillie arrière (45), un trou avant (46) et un trou arrière (47), dans lequel le trou avant (46) et le trou arrière (47) sont positionnés entre la rainure avant (41) et la rainure arrière (42), la saillie avant (44) fait saillie du bord d'attaque de la lame dans une direction vers l'extérieur depuis la lame (38), la saillie arrière (45) fait saillie du bord de fuite de la lame dans la direction vers l'extérieur depuis la lame (38), la saillie avant (44) est positionnée plus bas que la surface supérieure (43) d'une distance, la saillie arrière (45) est positionnée de manière adjacente à la surface supérieure (43), la rainure avant (41) est dotée d'une ouverture avant (64) ayant une largeur, l'ouverture avant (64) est orientée vers l'extérieur à partir de la lame, la rainure arrière (42) est dotée d'une ouverture arrière (65) ayant une largeur, l'ouverture arrière (65) est orientée vers l'extérieur à partir de la lame,
**caractérisé en ce que**
la section transversale de l'élément de jonction flexible (39) consiste en une extrémité avant (48), une extrémité arrière (49), une partie de liaison (50) positionnée entre l'extrémité avant (48) et l'extrémité arrière (49), une saillie verticale (51) faisant saillie de la partie de liaison (50) dans une direction vers le haut, une saillie horizontale (52) faisant saillie de l'extrémité de la saillie verticale (51) dans une direction vers l'arrière, et une saillie vers le haut (53) faisant saillie de l'extrémité de la saillie horizontale (52) dans la direction vers le haut, l'extrémité avant (48) a une hauteur qui est supérieure à la largeur de l'ouverture arrière (65) de la rainure arrière (42), l'extrémité arrière a une hauteur qui est supérieure à la largeur de l'ouverture avant (64) de la rainure avant (41),
la première lame (38) est fixée à l'élément de jonction flexible (39) de sorte que l'extrémité avant (48) de l'élément de jonction flexible (39) soit positionnée dans la rainure arrière (42) de la première lame et la partie de liaison (50) soit insérée à travers l'ouverture arrière (65) de la rainure arrière (42) de la première lame,
la lame suivante (38) est fixée à l'élément de jonction flexible (39) de sorte que l'extrémité arrière (49) de l'élément de jonction flexible (39) soit positionnée dans la rainure avant (41) de ladite lame suivante (38) et la partie de liaison (50) soit insérée à travers l'ouverture avant (64) de la rainure avant (41) de ladite lame suivante (38),
lorsque le couvercle roulant pour plateforme de camion se trouve dans une position fermée, la saillie horizontale (52) des éléments de jonction flexibles est positionnée entre la saillie arrière (45) de la première lame (38) et la saillie avant (44) de ladite lame suivante (38), et la saillie vers le haut (53) des éléments de jonction flexibles est positionnée entre la saillie arrière (45) de la première lame (38) et ladite lame suivante (38).

2. Couvercle roulant pour plateforme de camion selon la revendication 1, **caractérisé en ce qu'**il consiste en outre en cordons avant (54) positionnés à l'intérieur de l'extrémité avant (48) des éléments de jonction flexibles (39) et s'étendant sur la longueur de l'extrémité avant (48) et consistant en des cordons arrière (55) positionnés à l'intérieur de l'extrémité arrière (49) des éléments de jonction flexibles (39) et s'étendant sur la longueur de l'extrémité arrière (49).

3. Couvercle roulant pour plateforme de camion selon la revendication 1, **caractérisé en ce qu'**il consiste en outre en des couvertures gauches (40) fixées aux extrémités latérales gauches des lames (38), les couvertures (40) ayant pour fonction de coulisser sur un bord inférieur (62) d'une ouverture interne (60) d'un rail latéral gauche (36).

4. Couvercle roulant pour plateforme de camion selon la revendication 1, **caractérisé en ce que** lorsque le couvercle roulant pour plateforme de camion se trouve dans une position fermée, la surface supérieure de la saillie vers le haut (53) des éléments de jonction flexibles (39) affleure à la surface supérieure (43) de la première lame (38) et affleure à la surface supérieure (43) de la lame suivante (38).
